# EUROPEAN PATENT APPLICATION

(11) **EP 3 978 130 A1**
(43) Date of publication of application: **06.04.2022**
(21) Application number: 21199863.8
(22) Date of filing: 29.09.2021
(51) Int. Cl.: B01L 3/00, B01L 3/02, B65D 47/18, G01F 11/08

(54) **LIQUID TRANSFER DEVICE**

(30) Priority: 30.09.2020 US 202063085368 P; 30.06.2021 CN 202110737712
(71) Applicant: iCare Diagnostics International Co. Ltd., New Taipei 236 (TW)
(72) Inventor: CHANG, Chia-Hsin, 236 New Taipei (TW); HSU, Wei-Hua, 236 New Taipei (TW); HUANG, Po-Ching, 236 New Taipei (TW)
(74) Representative: Zaboliene, Reda

(57) **Abstract**

A device for transferring liquids and liquid samples in certain quantities includes a housing, a pressing unit, a liquid extraction assembly, and a connecting member. The pressing unit includes an extrusion portion. The housing includes a first sidewall and a second top wall. The first sidewall and the second top wall cooperatively define a receiving cavity. The pressing unit is received in the receiving cavity. The liquid extraction assembly includes a liquid extraction pipe. The liquid extraction assembly is detachably connected to the housing through the connecting member. The pressing unit can move back and forth along the central axis of the receiving cavity, so as to move the extrusion portion back and forth relative to the liquid extraction pipe. The liquid extraction pipe is deformed by the extrusion portion to absorb or release liquid in precise quantities.

## Description

### FIELD

The subject matter relates to a liquid transfer device.

### BACKGROUND

Molecular diagnosis, morphological detection, and immunological detection mostly need to be carried out in laboratories. Detection processes are time-consuming, complex, inefficient, and inflexible, and detection devices are generally not portable. Transferring of a sample usually need to be done in a laboratory. Therefore, the detection cannot be carried out at any time and in any place, especially at home.

### SUMMARY

To overcome the above shortcomings, the present disclosure provides a liquid transfer device, including a housing, characterized in that, the liquid transfer device further includes a pressing unit. The pressing unit includes a pressing body, a first top wall disposed on an end of the pressing body, and an extrusion portion disposed on the first top wall away from the pressing body, the housing includes a first sidewall and a second top wall connected to the first sidewall, the first sidewall and the second top wall cooperatively define a receiving cavity, the pressing unit is received in the receiving cavity. A connecting member includes a second sidewall and a first connecting portion connected to the second sidewall, the second sidewall is detachably connected to an end of the first sidewall close to the second top wall. A liquid extraction assembly includes a liquid extraction pipe, a liquid extraction head, and a second connecting portion, the liquid extraction head is connected to the liquid extraction pipe through the second connecting portion, the liquid extraction assembly extends into the receiving cavity through the second top wall and corresponds to the extrusion portion, the second connecting portion is detachably connected to the first connecting portion, the liquid extraction head is disposed out of the receiving cavity. The pressing unit is configured to move back and forth along a central axis of the receiving cavity, so as to drive the extrusion portion to move back and forth relative to the liquid extraction pipe, thereby causing the liquid extraction pipe to be compressed and rebounded to release or absorb a liquid, respectively.

In some embodiment, the liquid transfer device further includes a positioning member, the positioning member includes a sliding portion and at least one positioning portion, each of the at least one positioning portion is disposed on the first sidewall, and the sliding portion is received in the receiving cavity, the pressing unit further includes a sliding track corresponding to the sliding portion, the sliding track extends along the central axis, the sliding portion is configured to move back and forth along the sliding track, thereby limiting a movement of the pressing unit along the central axis.

In some embodiment, the positioning member further includes a connecting portion, and the at least one connecting portion is disposed between the positioning portion and the sliding portion.

In some embodiment, the positioning member includes two positioning portions, the first sidewall corresponding to the two positioning portions defines two positioning holes.

In some embodiment, the extrusion portion includes a third sidewall, one end of the third sidewall is connected to the first top wall, the third sidewall defines a liquid extraction groove, the liquid extraction groove is coaxial with the receiving cavity. A diameter of the liquid extraction groove decreases in a direction away from the second top wall, the liquid extraction pipe is configured to extend into or out of the liquid extraction groove, the third sidewall is configured to compress or release a sidewall of the liquid extraction pipe.

In some embodiment, a diameter of a cross section of the liquid extraction pipe perpendicular to the central axis gradually decreases from one end close to the liquid extraction head to another end away from the liquid extraction head.

In some embodiment, at least one extrusion block is disposed on an inner surface of the third sidewall, and at least one extrusion block is configured to compress or release the liquid extraction pipe.

In some embodiment, two extrusion blocks are disposed on the inner surface of the third sidewall and opposite to each other, the two extrusion blocks are configured to compress the liquid extraction pipe from opposite sides.

In some embodiment, only one extrusion block is disposed on the inner surface of the third sidewall, the extrusion block is annular and disposed on an inner surface of the third sidewall.

In some embodiment, the pressing unit further includes an elastic member received in the receiving cavity, one end of the elastic member is connected to the first top wall, and the other end is connected to the second top wall, the elastic member is configured to drive the pressing unit to move away from the second top wall

In some embodiment, the elastic member is sleeved outside of the extrusion portion.

In some embodiment, the pressing unit further includes a plurality of elastic members received in the receiving cavity, one end of each of the plurality of elastic members is connected to the first top wall and the other end is connected to the second top wall, the plurality of elastic members are disposed around the extrusion portion, the plurality of elastic members are configured to drive the pressing unit to move away from the second top wall.

In some embodiment, the connecting member further includes a third top wall connected to the second sidewall, the first connecting portion defines a first opening, a second opening, and a first clamping position, the first opening penetrates the third top wall, the second opening penetrates the third top wall and is connected to the first opening; the second connecting portion includes a connecting body, a second clamping position disposed on the connecting body, a guiding rod disposed on the connecting body, and a hook disposed on the guiding rod. The guiding rod extends into the first opening and clamps into the second opening, the hook clamps on a side of the first clamping position close to the receiving cavity, the second clamping position clamps on a side of the first opening away from the receiving cavity, thereby causing the first connecting portion to be detachably connected to the second connecting portion.

In some embodiment, the first connecting portion and the second connecting portion are threadedly connected to each other.

In some embodiment, an inner surface of the first sidewall of the housing defines a sliding slot, the sliding slot extends along the central axis, a surface of the pressing body close to the housing defines a guiding strip, when the pressing unit moves back and forth along the central axis, the guiding strip is configured to clamp into the sliding slot and move back and forth along the sliding slot.

In some embodiment, an outer diameter of an opening of the liquid extraction pipe is larger than an inner diameter of the second connecting portion.

In some embodiment, the liquid extraction head includes an open end and a closed end, and the open end is connected to the second connecting portion.

In some embodiment, the liquid transfer device further includes a pressing portion disposed on one end of the pressing body away from the first top wall.

The liquid transfer device of the present disclosure has a simple structure and a low cost, and is convenient to be operated. The liquid transfer device can precisely absorb and release the liquid. The liquid extraction assembly is detachably installed in the housing. The housing, the pressing unit, and the connecting member are recyclable. The liquid extraction assembly is disposable, which can be easily replaced.

### BRIEF DESCRIPTION OF THE DRAWINGS

Implementations of the present technology will now be described, by way of example only, with reference to the attached figures.
FIG. 1 is a diagrammatic view of an embodiment of a liquid transfer device in a resting state according to the present disclosure.
FIG. 2 is a diagrammatic view of an embodiment of the liquid transfer device in a compressed state according to the present disclosure.
FIG. 3 is an exploded diagrammatic view of an embodiment of the liquid transfer device according to the present disclosure.
FIG. 4 is a cross-sectional view taken along IV-IV of FIG. 1.
FIG. 5 is a cross-sectional view taken along V-V of FIG. 2.
FIG. 6 is a cross-sectional view taken along VI-VI of FIG. 1.
FIG. 7 is a cross-sectional view taken along VII-VII of FIG. 2.
FIG. 8 is a diagrammatic view of the housing of the device according to the present disclosure.
FIG. 9 is a side view of an embodiment of a pressing unit of the device according to the present disclosure.
FIG. 10 is a cross-sectional view of the pressing unit according to the present disclosure.
FIG. 11 is a rear, bottom perspective view of the pressing unit according to the present disclosure.
FIG. 12 is a front, top perspective view of an embodiment of a connecting member of the device according to the present disclosure.
FIG. 13 is a rear, bottom perspective view of the connecting member according to the present disclosure.
FIG. 14 is a diagrammatic view of an embodiment of a liquid extraction assembly according to the present disclosure.
FIG. 15 is a diagrammatic view showing an embodiment of a pressing unit separated from a liquid extraction assembly, according to the present disclosure.

### DETAILED DESCRIPTION

It will be appreciated that for simplicity and clarity of illustration, where appropriate, reference numerals have been repeated among the different figures to indicate corresponding or analogous components. In addition, numerous specific details are set forth in order to provide a thorough understanding of the embodiments described herein. However, it will be understood by those of ordinary skill in the art that the embodiments described herein can be practiced without these specific details. In other instances, methods, procedures, and components have not been described in detail so as not to obscure the related relevant feature being described. Also, the description is not to be considered as limiting the scope of the embodiments described herein. The drawings are not necessarily to scale, and the proportions of certain portions may be exaggerated to better illustrate details and features of the present disclosure.

The term "comprising," when utilized, means "including, but not necessarily limited to"; it specifically indicates open-ended inclusion or membership in the so-described combination, group, series, and the like.

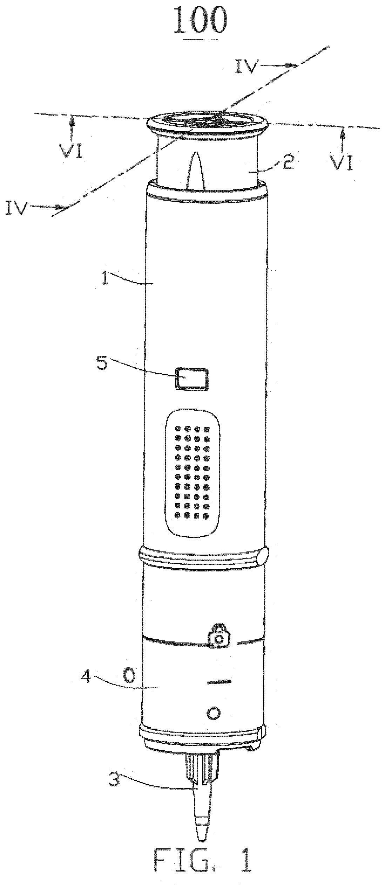

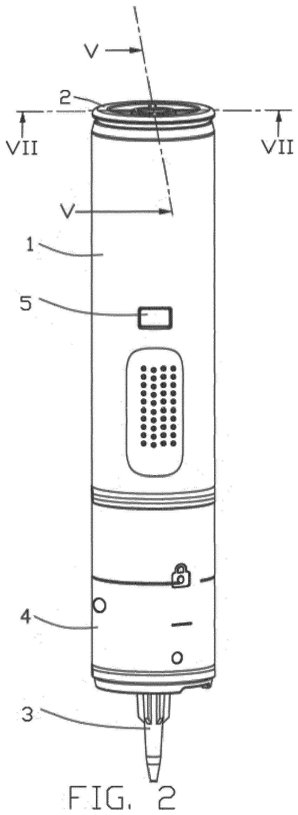

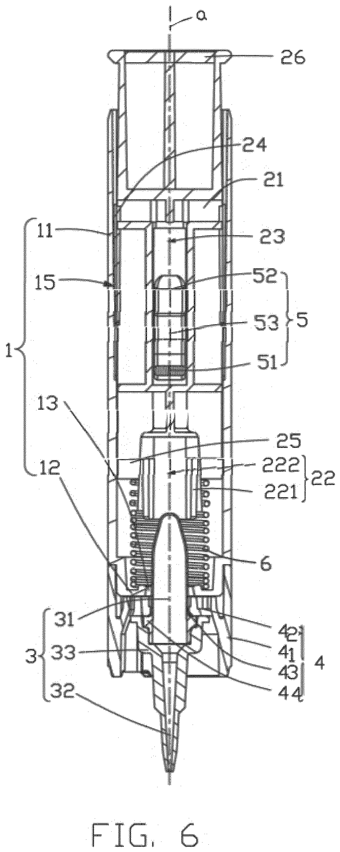

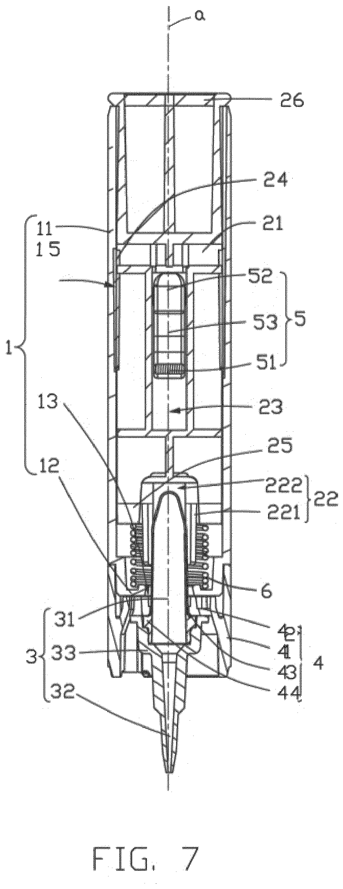

FIGS. 1 to 7 illustrate a liquid transfer device 100, which includes a housing 1, a pressing unit 2, a liquid extraction assembly 3, and a connecting member 4. The pressing unit 2 includes a pressing body 21, a first top wall 25 disposed on an end of the pressing body 21, and an extrusion portion 22 disposed on the first top wall 25 away from the pressing body 21. The housing 1 includes a first sidewall 11 and a second top wall 12. The first sidewall 11 is connected to the second top wall 12. The first sidewall 11 and the second top wall 12 cooperatively define a receiving cavity 17. The pressing unit 2 is received in the receiving cavity 17 and is configured to move back and forth along a central axis "a" of the receiving cavity 17. The connecting member 4 includes a second sidewall 41 and a first connecting portion 44. The first connecting portion 44 is connected to the second sidewall 41. The second sidewall 41 is detachably connected to an end of the first sidewall 11 close to the second top wall 12. The liquid extraction assembly 3 includes a liquid extraction pipe 31, a liquid extraction head 32, and a second connecting portion 33. The liquid extraction pipe 31 is connected to the liquid extraction head 32 through the second connecting portion 33. The liquid extraction assembly 3 extends into the receiving cavity 17 from a side of the second top wall 12 away from the receiving cavity 17 and corresponds to the extrusion portion 22. The liquid extraction head 32 is disposed outside of the receiving cavity 17. The second connecting portion 33 is detachably connected to the first connecting portion 44. The pressing unit 2 can move back and forth along the central axis "a" of the receiving cavity 17, so as to move the extrusion portion 22 back and forth relative to the liquid extraction pipe 31. Thereby, the liquid extraction pipe 31 is deformed by the extrusion portion 22 to release or absorb a liquid, respectively,

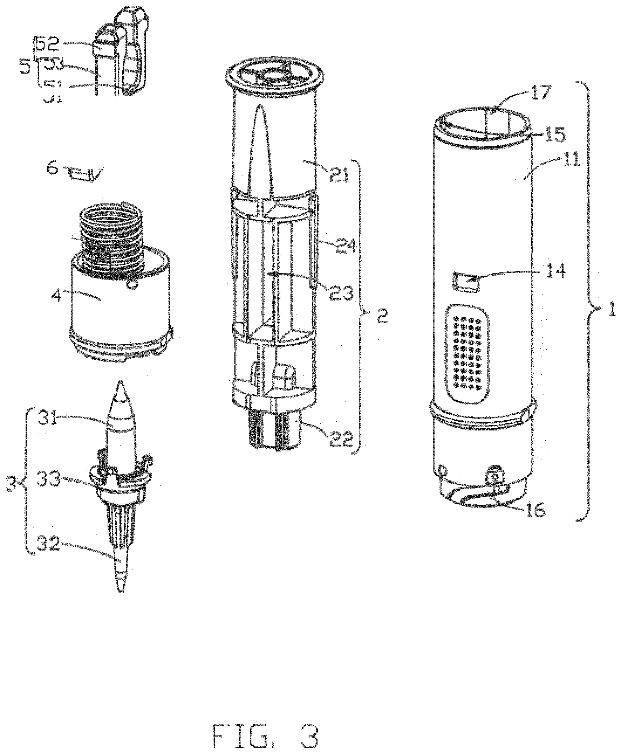

Referring to FIGS. 1 and 3, the second top wall 12 defines a first through hole 13. The first sidewall 11 defines a clamping groove 16. The liquid extraction pipe 31 extends into the receiving cavity 17 through the first through hole 13.

In an embodiment, the connecting member 4 and the housing 1 are connected by a latch.

In an embodiment, at least one clamping block 45 is disposed on the second sidewall 41. An outer surface of one end of the first sidewall 11 close to the second top wall 12 defines the clamping groove 16. The clamping groove 16 corresponds to the clamping block 45. The clamping block 45 slides into the clamping groove 16 to detachably connect the connecting member 4 to the housing 1.

In another embodiment, the connecting member 4 is threadedly engaged with the housing 1.

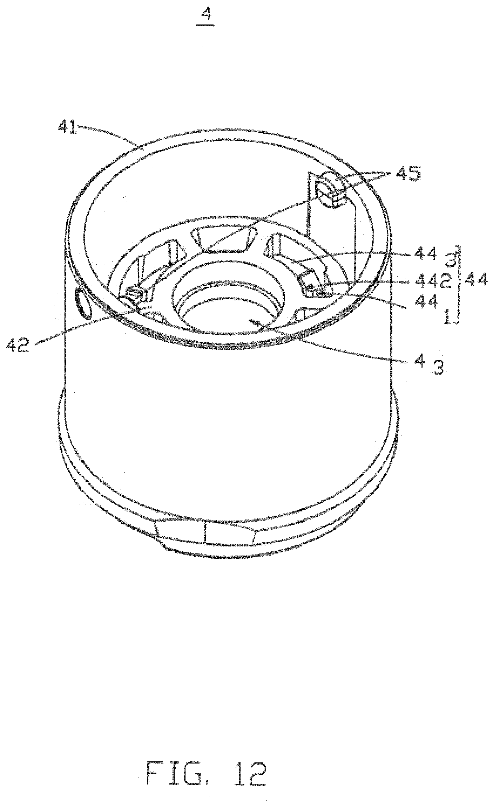

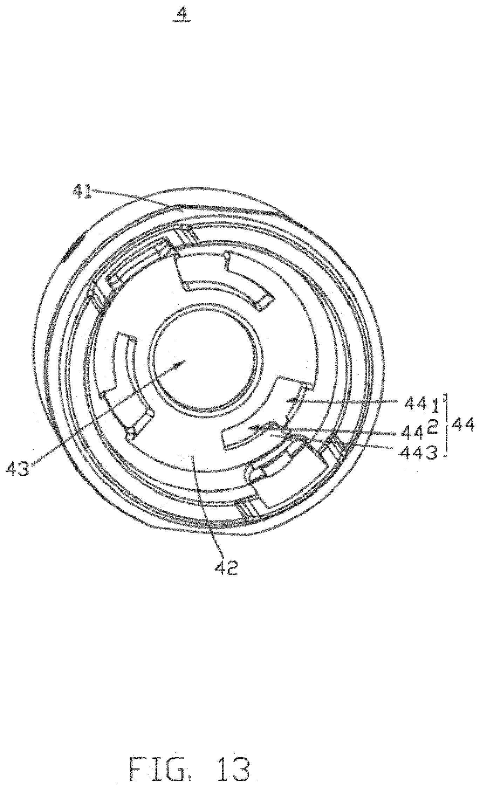

Referring to FIGS. 12 and 13, the connecting member 4 further includes a third top wall 42 connected to the second sidewall 41 and a second through hole 43 penetrating the third top wall 42. The first connecting portion 44 is located around the second through hole 43. The first connecting portion 44 includes a first opening 441, a second opening 442, and a first clamping position 443. The first opening 441 penetrates the third top wall 42. The second opening 442 penetrates the third top wall 42, and is connected to the first opening 441.

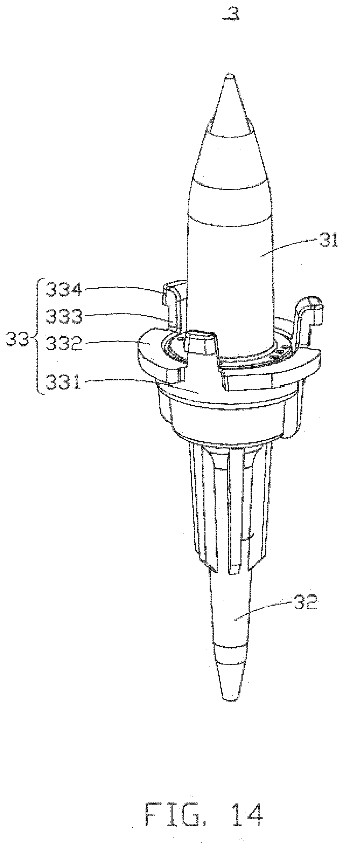

Referring to FIG. 14, the second connecting portion 33 includes a connecting body 331, a second clamping position 332 disposed on the connecting body 331, a guiding rod 333 disposed on the connecting body 331, and a hook 334 disposed on the guiding rod 333.

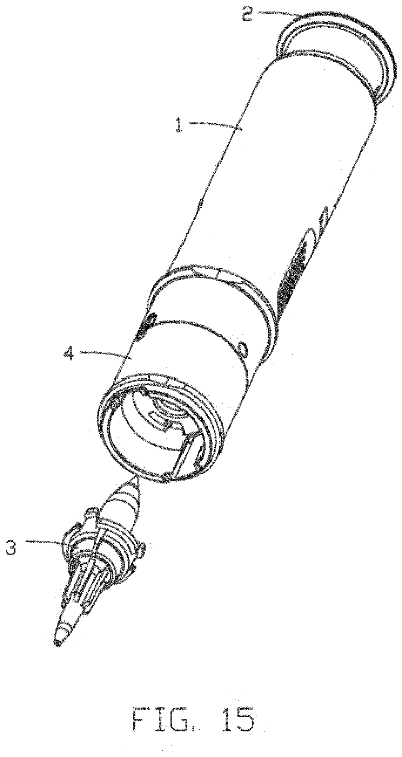

Referring to FIGS. 12 to 15, the liquid extraction pipe 31 extends into the receiving cavity 17 through the second through hole 43 and the first through hole 13. The guiding rod 333 extends into the first opening 441 from a side of the third top wall 42 away from the receiving cavity 17 and clamps into the second opening 442. The hook 334 clamps on a side of the first clamping position 443 close to the receiving cavity 17. The second clamping position 332 clamps on a side of the first opening 443 away from the receiving cavity 17. The second clamping position 332 and the hook 334 clamp the first clamping position 443 from opposite sides of the first clamping position 443, so that the first connecting portion 44 is detachably connected to the second connecting portion 33.

In another embodiment, an external thread (not shown) is disposed on an outer sidewall of the second connecting portion 33. An internal thread (not shown) is disposed on a sidewall of the first connecting portion 24 close to the second through hole 43. The first connecting portion 44 is threadedly engaged with the second connecting portion 33 through the external thread and the internal thread.

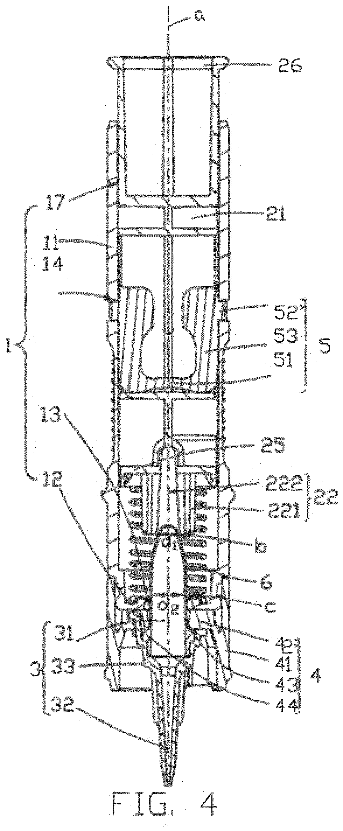

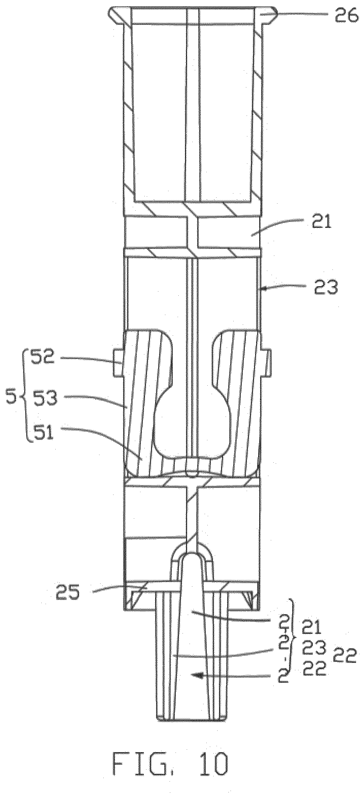

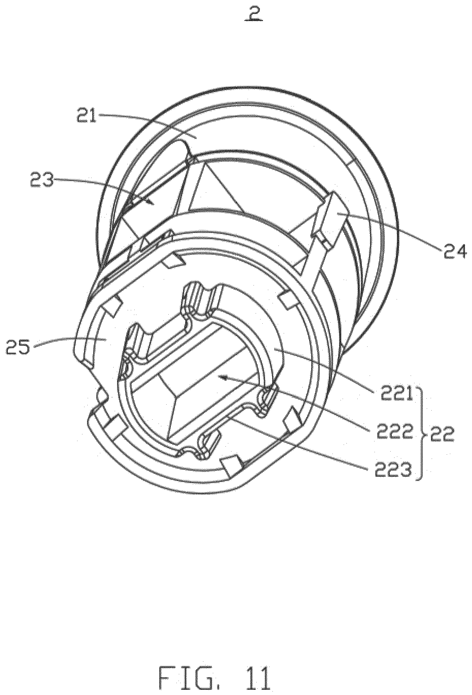

Referring to FIGS. 4, 5, and 9 to 11, the extrusion portion 22 includes a third sidewall 221. One end of the third sidewall 121 is connected to the first top wall 25. The third sidewall 221 defines a liquid extraction groove 222. The liquid extraction groove 222 is connected to the first through hole 13 and the second through hole 43. The first through hole 13 and the second through hole 43 are both coaxial with the liquid extraction groove 222. The liquid extraction pipe 31 extends into and out of the liquid extraction groove 222. The third sidewall 221 can compress or release a first sidewall of the liquid extraction pipe 31 to cause the liquid extraction pipe 31 to deform or rebound, thereby allowing the liquid extraction pipe 31 to release or absorb the liquid,

In an embodiment, a diameter of the liquid extraction groove 222 decreases in a direction away from the second top wall 12. The liquid extraction groove 222 is substantially a conical cavity.

In an embodiment, referring to FIGS. 4, 5, 10, and 11, at least one extrusion block 223 is disposed on a surface of the third sidewall 221 close to the liquid extraction groove 222. The liquid extraction pipe 31 extends into the liquid extraction groove 222. The extrusion block 223 compresses the liquid extraction pipe 31 to discharge air or liquid from the liquid extraction pipe 31. When the liquid extraction pipe 31 is reversed from the liquid extraction groove 222, the liquid extraction pipe 31 rebounds to absorb the liquid.

In an embodiment, a surface of the third sidewall 221 close to the liquid extraction groove 222 is protruding, and defines two extrusion blocks 223. The two extrusion blocks 223 are opposite to each other. The two extrusion blocks 223 can squeeze and compress the liquid extraction pipe 31 from opposite sides to evenly deform the liquid extraction pipe 31. The amount/volume of liquid absorbed by the liquid extraction pipe 31 is associated with the compression degree of the liquid extraction pipe 31. The compression degree of the liquid extraction pipe 31 can be set by adjusting a distance between the two extrusion blocks 223.

In another embodiment, only one extrusion block 223 is included. The extrusion block 223 is annular and disposed on a surface of the third sidewall 221 close to the liquid extraction groove 222.

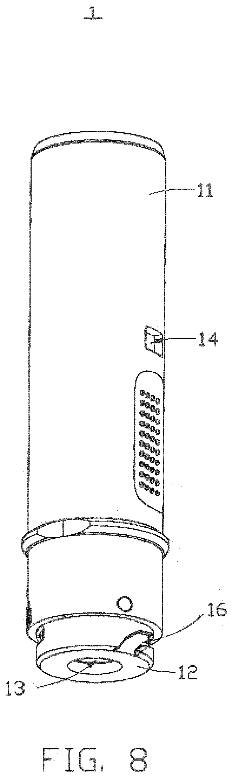

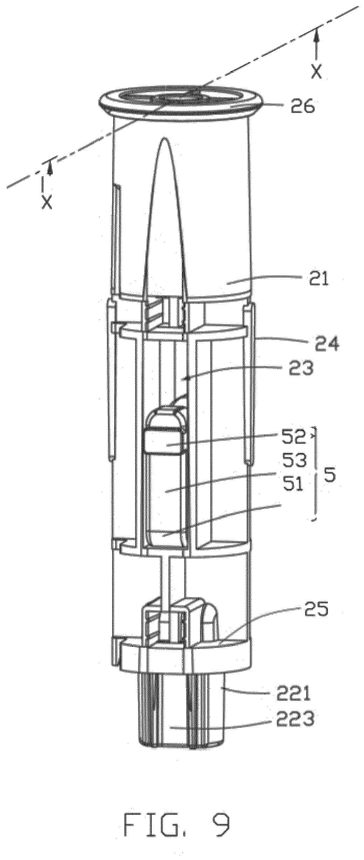

Referring to FIGS. 8 and 9, an inner surface of the first sidewall 11 of the housing 1 defines a sliding slot 15. The sliding slot 15 extends along the central axis "a" of the receiving cavity 17. A surface of the pressing body 21 of the pressing unit 2 close to the housing 1 defines a guiding strip 24. When the pressing unit 2 is received in the receiving cavity 17 of the housing 1 and moves back and forth along the central axis "a" of the receiving cavity 17, the guiding strip 24 can clamp into the sliding slot 15 and move back and forth along the sliding slot 15. The cooperation of the sliding slot 15 and the guiding strip 24 guides and limits movement distance of the pressing unit 2.

Referring to FIGS. 4, 5, and 8 to 10, the liquid transfer device 100 further includes a positioning member 5. The positioning member 5 includes a sliding portion 52 and a positioning portion 51. The positioning portion 51 is disposed on the first sidewall 11, and the sliding portion 52 is received in the receiving cavity 17. The pressing unit 2 further includes a sliding track 23 corresponding to the sliding portion 52. The sliding track 23 extends along the central axis "a" of the receiving cavity 17. The sliding portion 52 is configured to move back and forth along the sliding track 23, thereby limiting a movement of the pressing unit 2 along the central axis "a" of the receiving cavity 17. At the same time, the housing 1 is connected to the pressing unit 2 through the sliding connection between the sliding portion 52 and the sliding track 23.

In an embodiment, the first sidewall 11 of the housing 1 corresponding to the positioning portion 51 defines a positioning hole 14. The positioning portion 51 clamps into the positioning hole 14 to connect the positioning portion 5 and the housing 1.

In an embodiment, a connecting portion 53 is disposed between the positioning portion 51 and the sliding portion 52.

In an embodiment, the positioning member 5 includes two positioning portions 51, The first sidewall 11 corresponding to the two positioning portions 51 defines two positioning holes 14. At the same time, there are two connecting portions 53.

In an embodiment, the two positioning portions 51, the two connecting portions 53, and the sliding portion 52 form a U-shaped structure. The sliding track 23 is a long thin opening penetrating the pressing body 21. The sliding portion 52 of the positioning member 5 is embedded in the sliding track 23 and moves along the sliding track 23, which better limits the movement of the pressing unit 2.

Referring to FIGS. 3, 4 to 7, the liquid transfer device 100 further includes an elastic member 6 received in the receiving cavity 17. One end of the elastic member 6 is connected to the first top wall 25, and the other end is connected to the second top wall 12. When the pressing unit 2 moves down along the central axis "a" relative to the housing 1, the elastic member 6 is compressed and deformed. When the pressing unit 2 moves up along the central axis "a" relative to the housing 1, the elastic member 6 rebounds and the elastic member 6 drives the pressing unit 2 to return to its original position. The elastic member 6 can be installed in the receiving cavity 17 when assembling the pressing unit 2 and the housing, without preventing replacement of the liquid extraction assembly 3.

Referring to FIGS. 4 to 7, when the pressing unit 2 is pressed to move down and compress the elastic member 6, the sliding portion 52 is located at an upper end of the sliding track 23. When the pressing unit 2 returns to an initial state and the elastic member 6 is in an uncompressed state, the sliding portion 52 is located at a lower end of the sliding track 23. The reciprocating stroke of the pressing unit 2 can be accurately limited through the cooperation of the positioning portion 5 and the elastic member 6. A compression degree of the liquid extraction pipe 31 is associated with a reciprocating stroke of the pressing unit 2. Thereby, the moving distance of the pressing unit 2 can be controlled to control the volume of the absorbed liquid, so as to achieve quantitative liquid extraction.

In an embodiment, the elastic member 6 is sleeved on the extrusion portion 22 to balance and exert uniform pressure on the liquid extraction pipe 31.

In another embodiment, a plurality of elastic members 6 is included. The elastic members 6 are disposed around the extrusion portion 22 to apply an even pressure on the liquid extraction pipe 31, so that quantitative liquid extraction can be achieved.

Referring to FIGS. 4, 5, and 14, the liquid extraction pipe 31 is substantially a hollow tube with an open end. A cross section along a direction perpendicular to the central axis "a" of the second connecting portion 33 is substantially circular. The liquid extraction head 32 is substantially a hollow tube with an opening at both ends. One end of the second connecting portion 33 is connected to the open end of the liquid extraction pipe 31, and the other end is connected to the liquid extraction head 32. Thus, the liquid extraction pipe 31 is connected to the liquid extraction head 32 through the second connecting portion 33.

In an embodiment, the second connecting portion 33 and the liquid extraction head 32 are integrally formed. The liquid extraction pipe 31 is detachably installed on the second connecting portion 33. The liquid extraction assembly 3 can be farmed through an injection molding process. In the injection molding process, a cavity for forming the second connecting portion 33 and the liquid extraction head 32 is connected to a cavity for forming the liquid extraction pipe 31. The second connecting portion 33, the liquid extraction head 32, and the liquid extraction pipe 31 can be injection-molded at the same time, which shortens a molding cycle, improves efficiency, and reduces a manufacturing cost of the liquid extraction assembly 3. After molding, the open end of the liquid extraction pipe 31 is connected to the connecting body 331 of the second connecting portion 33 through a plastic strip (not shown). During assembly, the plastic strip is broken, and the liquid extraction pipe 31 covers the second connecting portion 33, to obtain the liquid extraction assembly 3.

In an embodiment, the liquid extraction pipe 31 is made of rubber. An outer diameter of the open end of the liquid extraction pipe 31 is slightly larger than an inner diameter of the second connecting portion 33. Therefore, the liquid extraction pipe 31. is connected to the second connecting portion 33 through an interference fit.

In an embodiment, a diameter of the cross section of the liquid extraction pipe 31 perpendicular to the central axis "a" gradually decreases from one end close to the liquid extraction head 32 to the other end away from the liquid extraction head 32. Thus, the liquid extraction pipe 31 is substantially an inverted conical pipe.

Referring to FIGS. 1 to 3, the liquid extraction assembly 3 further includes a head cover (not shown), which covers the end of the liquid extraction head 32 away from the liquid extraction pipe 31, to prevent the liquid extraction head 32 from being polluted.

In yet another embodiment, the liquid extraction head 32 of the liquid extraction assembly 3 is a tubular structure with an open end and a closed end. The open end of the liquid extraction head 32 is connected to the second connecting portion 33 away from the liquid extraction pipe 31. When in use, the closed end of the liquid extraction head 32 is broken and inserted into a liquid for liquid extraction. A head cover for the liquid extraction head 32 is not needed, reducing the cost of the liquid extraction assembly 3.

Referring to FIG. 4, the pressing unit 2 further includes a pressing portion 26, which covers one end of the pressing body 21 away from the first top wall 25. By pressing the pressing portion 26, the pressing unit 2 moves relative to the housing 1.

In an embodiment, a diameter of a cross section of the pressing portion 26 in a direction perpendicular to the central axis "a" of the receiving cavity 17 is larger than a diameter of an opening of the first sidewall 11 away from the second top wall 12, ensuring that, when pressed, the pressing portion 26 does not enter into the receiving cavity 17.

Referring to FIGS. 3 to 5, and 15, an assembly process of the liquid transfer device 100 includes the following steps.

At step one, the elastic member 6 is placed in the receiving cavity 17. Then the pressing unit 2 and the housing 1 are assembled to fix the elastic member 6.

At step two, the pressing portion 26 is installed on the housing 1.

At step three, the plastic strip between the liquid extraction pipe 31 and the second connecting portion 33 is broken. Then the liquid extraction pipe 31 covers the second connecting portion 33, Thereby, the liquid extraction assembly 3 is obtained.

At step four, the liquid extraction assembly 3 is extended into the receiving cavity 17 of the pressing unit 2 through the first through hole 13 and the second through hole 43. Then the second connecting portion 33 is clamped to the first connecting portion 44 of the second housing 2 to fix the liquid extraction assembly 3 on the connecting member 4. Thereby, the liquid transfer device 100 is obtained.

When the liquid extraction assembly 3 needs to be replaced, the liquid extraction assembly 3 can be easily removed from the connecting member 4 and replaced with a new liquid extraction assembly 3.

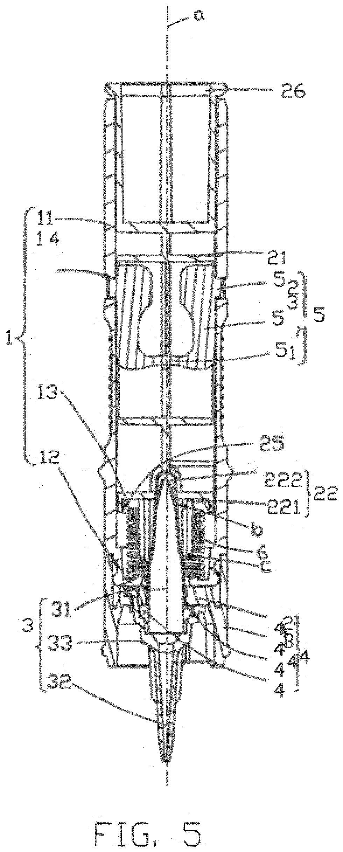

Referring to FIGS. 4 and 5, a portion of the liquid extraction pipe 31 away from the liquid extraction head 32 has a small inner diameter "D₁", such portion being referred to as smaller end "b". Another portion of the liquid extraction pipe 31 close to the liquid extraction head 32 has a large inner diameter "D₂", such portion being referred to as larger end "c". Referring to FIG. 4, before the liquid extraction pipe 31 is not compressed, the smaller end "b" is located at the bottom of the two extrusion blocks 223, and surfaces of the two extrusion blocks 223 are connected to top of the liquid extraction pipe 31. Referring to FIG. 5, when the pressing unit 2 moves down, the liquid extraction pipe 31 extends out of an opening of the two extrusion blocks 223 away from the liquid extraction head 32, so that the liquid extraction pipe 31 is compressed by the extrusion blocks 223. Finally, the smaller end "b" of the liquid extraction pipe 31 extends into the liquid extraction groove 222, the larger end "c" being located at the bottom of the two extrusion blocks 223, and the two extrusion blocks 223 squeeze and compress a sidewall of the liquid extraction pipe 31 to discharge air or other contents of the liquid extraction pipe 31. When the liquid extraction head 32 is immersed into a liquid, the pressing unit 2 can be released, and the elastic member 6 rebounds and drives the pressing unit 2 back to its original position, so that the liquid extraction pipe 31 exits from the two extrusion blocks 223, and the liquid extraction pipe 31 is restored to absorb liquid. The compression degree of the liquid extraction pipe 31 can be controlled to precisely control the volume of the absorbed liquid, so as to absorb certain units of liquid. The compression degree of the liquid extraction pipe 31 can be controlled by designing the inner diameter "D₁" and the inner diameter "D₂" of the liquid extraction pipe 31, a distance between the two extrusion blocks 223, the contact area between the two extrusion blocks 223 and the liquid extraction pipe 31, and a distance of movement of the pressing unit 2 relative to the housing 1.

Referring to FIGS. 4 to 7, when in use, the pressing portion 26 is pressed to drive the pressing unit 2 to move downward along a sidewall of the housing 1 to compress the liquid extraction pipe 31. The sliding portion 52 moves upward relative to the sliding track 23 to the top of the sliding track 23. Thus, air inside the liquid extraction pipe 31 is pushed out, causing the liquid extraction head 32 to receive the liquid. At this time, the elastic member 6 is compressed. Then, the pressing portion 26 is released, the elastic member 6 rebounds and pushes the pressing unit 2 to return to its original position. The sliding portion 52 moves down relative to the sliding track 23 to the low end of the sliding track 23. The extrusion block 223 moves up relative to the liquid extraction pipe 31 and releases the liquid extraction pipe 31, causing the liquid extraction pipe 31 to extract the liquid. The pressing unit 2 can be pressed again to move down relative to the housing 1, which further compresses the liquid extraction pipe 31 to discharge the liquid.

The liquid extraction assembly 3 is disposable. The liquid extraction assembly 3 has no need to be cleaned after use. The liquid extraction assembly 3 can be replaced at any time according to an actual need. The housing 1, the pressing unit 2, and the connecting member 4 can be reused to reduce a cost of the liquid transfer device 100.

The liquid transfer device 100 provided by the present disclosure can be used to transfer a variety of liquid samples. For example, samples of the liquid may be, but are not limited to, a biological sample, a veterinary sample, or an environmental sample.

The liquid transfer device 100 provided by the present disclosure can be used to collect and prepare volumes of 1 µl ~ 5 ml (such as 1 µl, 2 µl, 4 µl, 5 µl , 10 µl, 20 µl, 50 µl, 100 µl, 200 µl, 500 µl. 1 ml, 2 ml, and 5 ml of liquid, and any volumes in between).

In an embodiment, the liquid transfer device 100 is used in a nucleic acid detection process to transfer a liquid containing a nucleic acid sample. The liquid extraction head 32 is further configured to contain a reagent film for the nucleic acid detection. The reagent film is composed of multiple reagent powders, and attached on an inner sidewall of the liquid extraction head 32. When in use, the liquid extraction head 32 absorbs the liquid containing the nucleic acid sample according to the above method, and the liquid is then mixed with the reagent powders in the liquid extraction head 32, so that the reagent film and the liquid can be mixed more evenly.

The liquid transfer device 100 has a simple structure and a low cost, and is convenient to be operated. The liquid transfer device 100 can precisely absorb and discharge liquid. The liquid extraction assembly 3 is detachably installed in the housing 1. The housing 1, the pressing unit 2, and the connecting member 4 are recyclable. The liquid extraction assembly 3 is disposable, which can be easily replaced.

The embodiments shown and described above are only examples. Even though numerous characteristics and advantages of the present technology have been set forth in the foregoing description, together with details of the structure and function of the present disclosure, the disclosure is illustrative only, and changes may be made in the detail, including in matters of shape, size and arrangement of the parts within the principles of the present disclosure, up to and including, the full extent established by the broad general meaning of the terms used in the claims.

## Claims

1. A liquid transfer device (100), comprising a housing (1), **characterized in that**, the liquid transfer device (100) further comprises:
a pressing unit (2) comprises a pressing body (21), a first top wall (25) disposed on an end of the pressing body (21), and an extrusion portion (22) disposed on the first top wall (25) away from the pressing body (21), the housing (1) comprises a first sidewall (11) and a second top wall (12) connected to the first sidewall (11), the first sidewall (11) and the second top wall (12) cooperatively define a receiving cavity (17), the pressing unit (2) is received in the receiving cavity (17);
a connecting member (4) comprises a second sidewall (41) and a first connecting portion (44) connected to the second sidewall (41), the second sidewall (41) is detachably connected to an end of the first sidewall (11) close to the second top wall (12); and
a liquid extraction assembly (3) comprises a liquid extraction pipe (31), a liquid extraction head (32), and a second connecting portion (33), the liquid extraction head (32) is connected to the liquid extraction pipe (31) through the second connecting portion (33), the liquid extraction assembly (3) extends into the receiving cavity (17) through the second top wall (12) and corresponds to the extrusion portion (22), the second connecting portion (33) is detachably connected to the first connecting portion (44), the liquid extraction head (32) is disposed out of the receiving cavity (17);
the pressing unit (2) is configured to move back and forth along a central axis (a) of the receiving cavity (17), so as to drive the extrusion portion (22) to move back and forth relative to the liquid extraction pipe (31), thereby causing the liquid extraction pipe (31) to be compressed and rebounded to release or absorb a liquid, respectively.

2. The liquid transfer device (100) of claim 1, **characterized in that**, the liquid transfer device (100) further comprises a positioning member (5), the positioning member (5) comprises a sliding portion (52) and at least one positioning portion (51), each of the at least one positioning portion (51) is disposed on the first sidewall (11), and the sliding portion (52) is received in the receiving cavity (17), the pressing unit (2) further comprises a sliding track (23) corresponding to the sliding portion (52), the sliding track (23) extends along the central axis (a), the sliding portion (52) is configured to move back and forth along the sliding track (23), thereby limiting a movement of the pressing unit (2) along the central axis (a),

3. The liquid transfer device (100) of claim 2, **characterized in that**, the positioning member (5) further comprises a connecting portion (53), and the connecting portion (53) is disposed between the at least one positioning portion (51) and the sliding portion (52).

4. The liquid transfer device (100) of claim 3, **characterized in that**, the positioning member (5) comprises two positioning portions (51), the first sidewall (11) corresponding to the two positioning portions (51) defines two positioning holes.

5. The liquid transfer device (100) of claim 1, **characterized in that**, the extrusion portion (22) comprises a third sidewall (221), one end of the third sidewall (221) is connected to the first top wall (25), the third sidewall (221) defines a liquid extraction groove (222), the liquid extraction groove (222) is coaxial with the receiving cavity (17);
a diameter of the liquid extraction groove (222) decreases in a direction away from the second top wall (12), the liquid extraction pipe (31) is configured to extend into or out of the liquid extraction groove (222), the third sidewall (221) is configured to compress or release a sidewall of the liquid extraction pipe (31).

6. The liquid transfer device (100) of claim 5, **characterized in that**, a diameter of a cross section of the liquid extraction pipe (31) perpendicular to the central axis (a) gradually decreases from one end close to the liquid extraction head (32) to another end away from the liquid extraction head (32).

7. The liquid transfer device (100) of claim 5, **characterized in that**, at least one extrusion block (223) is disposed on an inner surface of the third sidewall (221), and at least one extrusion block (223) is configured to compress or release the liquid extraction pipe (31).

8. The liquid transfer device (100) of claim 1, **characterized in that**, the pressing unit (2) further comprises an elastic member (6) received in the receiving cavity (17), one end of the elastic member (6) is connected to the first top wall (25) and the other end is connected to the second top wall (12), the elastic member (6) is configured to drive the pressing unit (2) to move away from the second top wall (12).

9. The liquid transfer device (100) of claim 8, **characterized in that**, the elastic member (6) is sleeved outside of the extrusion portion (22).

10. The liquid transfer device (100) of claim 1, **characterized in that**, the pressing unit (2) further comprises a plurality of elastic members (6) received in the receiving cavity (17), one end of each of the plurality of elastic members (6) is connected to the first top wall (25), and the other end is connected to the second top wall (12), the plurality of elastic members (6) are disposed around the extrusion portion (22), the plurality of elastic members (6) are configured to drive the pressing unit (2) to move away from the second top wall (12).

11. The liquid transfer device (100) of claim 1, **characterized in that**, the connecting member (4) further comprises a third top wall (42) connected to the second sidewall (41), the first connecting portion (44) defines a first opening (441), a second opening (442), and a first clamping position (443), the first opening (441) penetrates the third top wall (42), the second opening (442) penetrates the third top wall (42) and is connected to the first opening (441); the second connecting portion (33) comprises a connecting body (331), a second clamping position (332) disposed on the connecting body (331), a guiding rod (333) disposed on the connecting body (331), and a hook (334) disposed on the guiding rod (333);
the guiding rod (333) extends into the first opening (441) and clamps into the second opening (442), the hook (334) clamps on a side of the first clamping position (443) close to the receiving cavity (17), the second clamping position (332) clamps on a side of the first opening (441) away from the receiving cavity (17), thereby causing the first connecting portion (44) to be detachably connected to the second connecting portion (33).

12. The liquid transfer device (100) of claim 1, **characterized in that**, an inner surface of the first sidewall (11) of the housing (1) defines a sliding slot (15), the sliding slot (15) extends along the central axis (a), a surface of the pressing body (21) close to the housing (1) defines a guiding strip (24), when the pressing unit (2) moves back and forth along the central axis (a), the guiding strip (24) is configured to clamp into the sliding slot (15) and move back and forth along the sliding slot (15).

13. The liquid transfer device (100) of claim 1, **characterized in that**, an outer diameter of an opening of the liquid extraction pipe (31) is larger than an inner diameter of the second connecting portion (33).

14. The liquid transfer device (100) of claim 1, **characterized in that**, the liquid extraction head (32) comprises an open end and a closed end, and the open end is connected to the second connecting portion (33).

15. The liquid transfer device (100) of claim 1, **characterized in that**, the liquid transfer device (100) further comprises a pressing portion (26) disposed on one end of the pressing body (21) away from the first top wall (25).
